# EUROPEAN PATENT APPLICATION

(11) **EP 4 707 241 A1**
(43) Date of publication of application: **11.03.2026**
(21) Application number: 24198651.2
(22) Date of filing: 05.09.2024
(51) Int. Cl.: C01G 23/00, C01G 35/00

(54) **METHOD FOR GROWTH OF LAYERED TRANSITION METAL SULFIDES OF TITANIUM OR TANTALUM**

(71) Applicant: Universität Hamburg KöR, 20148 Hamburg (DE)
(72) Inventor: Zito, Cecilia, 22549 Hamburg (DE); Kociej, Dorota, 22765 Hamburg (DE); Ulmen, Philipp Maximilian, 22549 Hamburg (DE)
(74) Representative: RCD-Patent Giesen, Schmelcher & Griebel Patentanwälte PartG mbB

(57) **Abstract**

The invention relates to a method for the preparation of titanium or tantalum sulfides comprising the following steps:
a) Adding a titanium or tantalum precursor to an anhydrous solvent under inert conditions,
b) Adding a sulfur source to the mixture of step a),
c) optionally providing a substrate for heterogeneous growth,
d) transferring the mixture of step b) and optionally the substrate of step c) into a suitable container, under inert conditions and sealing the container,
e) heating the sealed autoclave of step d) to a temperature of between 170°C and 250°C, preferably between 200°C and 230°C, especially to 210°C, and
f) obtaining, optionally washing the titanium sulfide or tantalum sulfide particles with an organic solvent, and drying,
and to the use of the titanium or tantalum sulfide thus prepared, as well as to a substrate with a layered crystal titanium or tantalum sulfide grown on the substrate according to the method above.

## Description

The invention relates to a solvothermal method for the growth of layered transition metal sulfides of titanium or tantalum, especially of titanium disulfide (TiS₂) and tantalum disulfide (TaS₂), homogeneously or heterogeneously on a substrate.

Transition metals (TM) from groups IV, and V, namely Ti and Ta, form layer-structured sulfides, displaying unique electronic properties. The layered structure refers to the sulfides' crystal structure, consisting of layers stacked on top of each other, where one atomic layer is composed of TM atoms sandwiched between two atomic layers of sulfur. These layers are held together by van der Waals forces. For example, tantalum disulfide (TaS₂) shows a Mott insulating state, charge density wave (CDW) phase transitions, and superconductivity properties. Titanium(IV) sulfide (TiS₂) has been successfully employed as an electrode material for rechargeable sodium and lithium ion batteries. Both sulfides exhibit different polymorphs, including trigonal (1T) and hexagonal (2H) phases. For TiS₂, the 1T phase with octahedral coordination is more thermodynamically stable than its 2H phase, whereas TaS₂ is more stable in the 2H phase. However, the 1T phase of TaS₂ is the only one phase exhibiting a Mott insulating behaviour.

The synthetic routes to obtain the layered transition metal sulfides (TMS), especially in a phase pure crystalline form, include chemical vapor deposition (CVD), molecular beam epitaxy (MBE), and the exfoliation of bulk crystals, which can be achieved mechanically, electrochemically or via liquid-phase exfoliation. These methods present a few drawbacks, such as low scalability, requirement of ultra-high vacuum conditions, and high temperatures, usually above 550°C. Instead, solution-based synthetic routes (e.g., solvothermal, hot-injection, one-pot heat-up methods) can produce transition metal sulfides (TMS) on a large scale with milder reaction conditions. However, it is challenging to obtain phase pure crystalline TMS such as TaS₂, NbS₂, TiS₂, HfS₂, and ZrS₂, via a solution-phase synthesis, making CVD, MBE, and exfoliation methods still widely preferred.

For TaS₂, as the representative case of the transition metal sulfides mentioned above, reports in the literature on solution-phase synthesis are rare. For example, a solvothermal approach is presented in the publication "Non-hydrolytic sol-gel synthesis of tantalum sulfides" by Zhou et al. in the Journal of Sol-Gel Science Technology, 2014, 69, 596-604. The described synthesis of TaS₂ takes place for seven days and yields amorphous or low-crystalline materials, which requires an additional heat treatment above 200°C for complete crystallization of the product. The other so-far reported syntheses in solution correspond to hot-injection methods, such as in the publications 1. "Well-defined colloidal 2-D layered transition-metal chalcogenide nanocrystals via generalized synthetic protocols" from Jeong et al. in the Journal of American Chemical Society, 2012, 133, 44, 18233-18236; 2. "Constructing 1T-2H TaS2 nanosheets with architecture and defect engineering for enhance hydrogen evolution reaction" from Shen et al. in the Journal of Alloys and Compounds, 2023, 935, 167877; 3. "Solution-based synthesis of sulvanite Cu3TaS4 and Cu3TaSe4 nanocrystals", from Liu et al. in Crystal, 2021, 11(1), 51, and 4. "Solid-state chemistry on a surface and in a beaker: Unconventional routes to transition metal chalcogenide nanomaterials" from Stender et al. in the Journal of Solid State Chemistry, 2008, 181, 1621-1627. Yet, the proposed methods still have some disadvantages. In 1-3, the reaction requires a temperature of 300°C, while in 3, the final product also has a poor crystallinity degree, and in 4, additional heat treatment under an inert atmosphere at 650°C is required to obtain the crystalline material.

Another example for a synthesis in solution is described in Chinese patent application CN 113880140 A. Here, tantalum (V) chloride is dissolved in oleylamine under inert conditions, the solution is heated to 300°C and CS₂ is added to the heated solution as a sulfur source. After one and a half hour the heating is stopped and the mixture is being allowed to cool to room temperature. However, tantalum disulfide nanosheets with different degrees of 2H/1T mixed phases are obtained. It is also described that different stacking appearances of the nanosheets are obtained by changing the heating process.

It is therefore an object of the present invention to provide a method for producing selected transition metal sulfides, i.e. titanium sulfide and tantalum sulfide, in a phase pure crystallinity under mild conditions. The method should include less heating for energy saving and should be easy to carry out in a scalable batch process. It is also an object of the present invention to provide a method that has the potential to control the morphology of the obtained sulfide crystals by different changes of the reaction parameters and/or by choice of reactants. Further, the method should be able to produce the transition metal sulfides either homogeneously or in a heterogeneous manner on a substrate. The homogenous growth of the transition metal sulfides corresponds to the formation of the particles in solution without the need for a surface. In contrast, the heterogeneous growth involves the nucleation and formation of the particles on a surface, such as a substrate, which acts as a seed, rather than in solution.

It is a further object of the present invention to provide a layered tantalum or titanium disulfide directly grown on a substrate which is crystalline, phase pure, and which morphology can be controlled to be either "disk"-like comprising distinct "nano-disks" or "flower"-like, thereby also controlling the surface area of the layered crystal disulfide structures.

The objects are solved by the method of claim 1. Further preferred embodiments are given in the subsequent claims.

With the new inventive method, it is for the first time possible to produce crystalline and phase pure tantalum disulfide or titanium disulfide by means of a solvothermal reaction path with efficient reaction times, via a one-step route, and at a lower temperature than other so-far known methods. In addition, the growth of the sulfide particles can take place via homogeneous or heterogeneous growth, which means that the particles can be grown directly on substrates with the inventive solvothermal method of the present invention.

The present invention relates to a method for the preparation of titanium or tantalum sulfides comprising the following steps:
a) Adding a titanium or tantalum precursor to an anhydrous solvent under inert conditions,
b) Adding a sulfur source to the mixture of step a),
c) optionally providing a substrate for heterogeneous growth,
d) transferring the mixture of step b) and optionally the substrate of step c) into a suitable container, under inert conditions and sealing the container,
e) heating the sealed autoclave of step d) to a temperature of between 170°C and 250°C, preferably between 200°C and 230°C, especially to 210°C, and
f) obtaining, optionally washing the titanium sulfide or tantalum sulfide particles with an organic solvent, and drying.

In step a) a transition metal precursor, i.e. a titanium or tantalum precursor, is added to an anhydrous solvent under inert conditions. Oxygen and/or water in the conditions should be avoided due to formation of unwanted oxides by the presence of oxygen sources resulting in lower purity and lower yield of the desired sulfides. Like that, it is of importance for a high purity and good yield of the desired sulfides to chose an anhydrous solvent and work under inert conditions, i.e. for example under nitrogen or argon atmosphere.

As used herein, the term tantalum precursor can refer to a precursor that can be represented by a chemical formula that includes tantalum. Similarly, the term titanium precursor can refer to a precursor that can be represented by a chemical formula that includes titanium. In some embodiments, the term "precursor" refers generally to a compound that participates in the chemical reaction that produces another compound.

In principle, the transition metal precursor, i.e. the titanium or tantalum precursor, can be any respective transition metal salt or metalorganic compound. The terms metalorganic and organometallic can be used interchangeably and can refer to organic compounds containing a metal species.

In accordance with exemplary embodiments, the tantalum precursor comprises a nitrogen-coordinated compound, such as one or more of amides, imides, and amidinates. In some embodiments, the tantalum metalorganic precursor comprises one or more of amide ligand (e.g., Ta(NEtMe)₅ and Ta(NMe₂)₅) and an imido ligand (e.g., both types of ligands, such as Ta(NtBu)(NEt₂)₃). In some embodiments, the tantalum precursor comprises a heteroleptic compound. A heteroleptic compound can comprise cyclopentadienyl (Cp) and halogen such as chloride, or Cp and alkylamine, or amide and halide, such as chloride. In other embodiments, the tantalum precursor comprises a homoleptic compound. In some embodiments, the tantalum halide precursor may comprise at least one halide ligand while the rest of the ligands are different, such as metalorganic or organometallic ligands as described herein. In some embodiments, the tantalum halide precursor may comprise one, two, three, four, or five halide ligands. In some embodiments, the tantalum metalorganic precursor may comprise at least one of a tantalum alkylamide precursor, a tantalum cyclopentadienyl-ligand containing precursor, or other metalorganic tantalum precursors. In some embodiments of the disclosure, the tantalum precursor comprises one or more bidentate ligands which are bonded to tantalum through nitrogen and/or oxygen atoms. In some embodiments, the tantalum precursor comprises one or more ligands which are bonded to tantalum through nitrogen, oxygen, and/or carbon. In some embodiments, the tantalum precursor is not halide. In some embodiments, the tantalum precursor does not comprise a halogen. In some embodiments, a ligand can include one or more of an alkoxo, an amidinate, and/or a pyrazolate group.

In accordance with exemplary embodiments, the titanium precursor comprises a nitrogen-coordinated compound, such as one or more of amides, imides, and amidinates. In some embodiments, the titanium metalorganic precursor comprises one or more of amide ligand (e.g., Ti(NEtMe)₄ and Ti(NMe₂)₄) and an imido ligand. In some embodiments, the titanium precursor comprises a heteroleptic compound. A heteroleptic compound can comprise cyclopentadienyl (Cp) and halogen such as chloride, or Cp and alkylamine, or amide and halide, such as chloride. In other embodiments, the titanium precursor comprises a homoleptic compound. In some embodiments, the titanium halide precursor may comprise at least one halide ligand while the rest of the ligands are different, such as metalorganic or organometallic ligands as described herein. In some embodiments, the titanium halide precursor may comprise one, two, three, or four halide ligands. In some embodiments, the titanium metalorganic precursor may comprise at least one of a titanium alkylamide precursor, a titanium cyclopentadienyl-ligand containing precursor, or other metalorganic titanium precursors. In some embodiments of the disclosure, the titanium precursor comprises one or more bidentate ligands which are bonded to titanium through nitrogen and/or oxygen atoms. In some embodiments, the titanium precursor comprises one or more ligands which are bonded to titanium through nitrogen, oxygen, and/or carbon. In some embodiments, the titanium precursor is not halide. In some embodiments, the titanium precursor does not comprise a halogen. In some embodiments, a ligand can include one or more of an alkoxo, an amidinate, and/or a pyrazolate group.

In a preferred embodiment of the present invention the titanium or tantalum precursor is selected from the group consisting of respective halides and metal-organic compounds. Preferred examples are TaCl₅, TaF₅, Tal₅, TaBr₅, Tantalum (V) (tetraethoxy)(acetylacetonate), Tantalum (V) butoxide, Tantalum (V) ethoxide, Tantalum tetraethoxy dimethylaminoethoxide, Pentakis(dimethylamino) tantalum (V), Tris(diethylamido)(ethylimido)tantalum (V), t-Amylimidotris (dimethylamido) tantalum (V), tert-Butylimidotris(dimethylamido)tantalum (V), Titanium (IV) chloride, Titanium (IV) fluoride, Titanium (IV) bromide, Titanium (IV) iodide, TiF₃, Titanyl acetylacetonate, Tris(acetylacetonato)titanium (III), Titanium (IV) ethoxide, Titanium (IV) isopropoxide, Tetrakis(dimethylamido)titanium (IV), Titanium (IV) butoxide, Tetrakis(ethylmethylamido)titanium (IV), to name but a few.

Other suitable compounds include changing the alkyl substituent(s) in amido or imido ligands of any of the above compounds. Suitable tantalum precursors or titanium can be selected from any combination or subset (e.g., one or more, two or more, and the like) of the above exemplary tantalum or titanium precursors.

As an anhydrous solvent, any at room temperature liquid fluid is understood that is free of water. In a preferred embodiment, the anhydrous solvent of step a) is selected from the group consisting of hydrocarbons, and especially aromatic hydrocarbons. Suitable examples are toluene, benzene, xylene, and mesitylene.

The addition of step a) of the titanium or tantalum precursor to the anhydrous solvent can result in being a solution, a dispersion, or a suspension. However, it is preferred to choose such solvents and conditions that a very good distribution of the titanium or tantalum precursor within the solvent is achieved, preferably a solution.

In step b) of the inventive method a sulfur source is added to the mixture of step a), i.e. to the mixture of titanium or tantalum precursor and anhydrous solvent.

As used herein, the term sulfur source can refer to any sulfur-containing organic compound, preferably to a sulfur-organic compound with one or more than one sulfur-containing group, as for example a thiol, a dithiol, a sulfide or a disulfide.

In a preferred embodiment of the present invention the sulfur source is an organic thiol, an organic dithiol, or an organic disulfide. These compounds have been found very useful in the solvothermal method of the present invention as they show a good mixing and distribution behaviour in anhydrous solvents, preferably they dissolve in the anhydrous solvent used. Like that, it is possible to have quite low reaction times for the formation of the desired titanium or tantalum sulfides, making the method interesting also for application in industrial scale.

Preferably, the carbon chain of the organic sulfur source has between 3 and 15 carbons. Again, good solubility in the anhydrous solvent is advantageous. Further, the organic sulfur-containing compounds with 3 to 15 carbons are less toxic than such sulfur-sources like CS₂ or H₂S, which are widely used in prior art methods. In addition, it has been surprisingly found that the morphology of the resulting crystalline titanium or tantalum sulfide can be influenced by the choice of the sulfur source. Loner chain organic sulfur-containing compounds or such compounds with a more branched chain like tertiary chains versus primary chains have been found to give more "flower"-like morphology versus a more "disk"-like morphology of the particles when primary chains of the same length or shorter length chains in the sulfur source compound were used.

In another preferred embodiment of the present invention the sulfur source is selected from the group of 1-dodecanethiol, 1-undecanehiol, 1-decanethiol. 1-nonanethiol, 1-octanethiol, 1-heptanethiol, 1-hexanethiol, 1-pentanethiol, tert.-dodecanethiol, tert.-undecanethiol, tert.-decanethiol, tert.-nonanethiol, sec.-dodecanethiol, sec.-undecanethiol, sec.-decanethiol, sec.-nonanethiol, sec.-octanethiol, dimethyl disulfide, diethyl disulfide, di-tert-butyl disulfide, propyl disulfide, dipropyl di-sulfide, hexyl disulfide, isopentyl disulfide, diisoamyl disulfide, 1,2-ethanedithiol, 1,4-butanedithiol, 1,5-pentanedithiol, 1,6-hexanedithiol, 1,8-octanedithiol, 1,10-decanedithiol, 1,11-undecanedithiol.

Preferably, the sulfur source in step b) is added under stirring for good distribution and mixing with the titanium or tantalum precursor. Inert conditions are to be upheld while adding the sulfur source to the mixture of step a).

In a preferred embodiment of the present inventive method the molar ratio of the sulfur source to the tantalum or titanium precursor is between 2:1 and 60:1, preferably between 10:1 and 30:1, more preferably around 20:1. A notable excess amount of the sulfur source over the molar amount of the metal precursor should be used in the sovothermal reaction of the invention in order to facilitate the reaction taking place and facilitate formation of the crystalline disulfide.

In optional step c) a substrate can be introduced into the mixture of step b) for heterogeneous growth. Again, inert conditions should be observed while introducing the substrate. For the homogeneous growth of the TaS₂ or TiS₂, the step c) is skipped and no substrate is utilized.

As used herein, the term substrate can refer to any underlying material or materials upon which a layer can be deposited. A substrate can include a bulk material, such as silicon (e.g., single-crystal silicon), carbon cloth, or other semiconductor material, or a metal, such as gold, and can include one or more layers, such as native oxides or other layers, overlying or underlying the bulk material. Further, the substrate can include various topologies, such as recesses, lines, and the like formed within or on at least a portion of a layer and/or bulk material of the substrate. By way of particular examples, a substrate may comprise one or more materials including, but not limited to, carbon, silicon (Si), germanium (Ge), germanium tin (GeSn), silicon germanium (SiGe), silicon germanium tin (SiGeSn), silicon carbide (SiC), or a group III-V semiconductor material, such as, for example, gallium arsenide (GaAs), gallium phosphide (GaP), or gallium nitride (GaN). In some embodiments, the substrate may comprise one or more dielectric materials including, but not limited to, oxides, nitrides, or oxynitrides. For example, the substrate may comprise a silicon oxide (e.g., SiO₂), a metal oxide (e.g., Al₂O₃), a silicon nitride (e.g., Si₃N₄), or a silicon oxynitride. In some embodiments of the disclosure, the substrate may comprise an engineered substrate wherein a surface semiconductor layer is disposed over a bulk support with an intervening buried oxide (BOX) disposed therebetween. Patterned substrates can include features formed into or onto a surface of the substrate, for example, a patterned substrate may comprise partially fabricated semiconductor device structures, such as, for example, transistors and/or memory elements. In some embodiments, the substrate may contain monocrystalline surfaces and/or one or more secondary surfaces that may comprise a non-monocrystalline surface, such as a polycrystalline surface and/or an amorphous surface. Monocrystalline surfaces may comprise, for example, one or more of silicon, silicon germanium, germanium tin, germanium, or a III-V material. Polycrystalline or amorphous surfaces may include dielectric materials, such as oxides, oxynitrides, or nitrides, such as, for example, silicon oxides and silicon nitrides. The substrate may contain layers of other 2D materials, for example, transition metal dichalcogenides, graphene, fluorographene and hexagonal boron nitride (h-BN).

In a preferred embodiment of the present invention the substrate is a conductive or non-conductive material, and is preferably selected from the group consisting of borosilicate glass, quartz, silicon wafer, Si₃N₄-coated Si wafer, sapphire wafer, mica wafer, fluorine doped tin oxide glass (FTO), gold coated FTO, glassy carbon, carbon cloth, metallic Ta plate electrode, Au foil, stainless-steel plate electrode, gold coated substrates, gallium arsenide wafer, indium tin oxide (ITO) coated glass, carbonaceous electrode, graphite coated substrate, graphene-coated substrates, hexagonal boron nitride (h-BN) films, polytetrafluoroethylene (PTFE) membranes.

The substrates generally decrease the energy barrier for the nucleation and crystallization of the disulfide particles; hence, the resulting TaS₂ or TiS₂ exhibits high crystallinity even in short reaction times for a solvothermal method.

The use of different types of substrates also can be used to control the morphology of the titanium or tantalum sulfide grown onto their surface. The use of Au-coated FTO glass, for example was found to cause the formation of a film layer structure of tantalum disulfide on the glass surface. The use of other substrate types, however, does not lead to a film formation. Instead, the TaS₂ particles grown on the Si/SiO₂ substrate surface are homogeneously dispersed in a "flower"-like morphology. Using a carbon cloth substrate resulted in a "nano-disk"-like built of the particles with relatively short reaction times, while for longer reaction times they assemble into a 3D "flower"-like morphology. TaS₂ particles grown on FTO glass or Si₃N₄-coated Si wafer as a substrate corresponded to the "nano-disk"-like morphology. The possibility to finely control the morphology of the TaS₂ particle growth, their size and arrangement on the substrate surface is highly beneficial for the desired use of the material for example as quantum material, electrocatalyst for hydrogen and oxygen evolution reactions, as optoelectronic and memory devices, supercapacitors, charge-density-wave oscillators, transistors, in micro-electromechanical systems (MEMS), sensors, and spintronic devices. TiS₂ particles growth with a method of the present invention can be used with the same advantages in rechargeable sodium and lithium-ion batteries.

In step d) the mixture of step b) and optionally with the substrate of step c) is transferred into a suitable container, under inert conditions and the container is sealed.

The container can be of any suitable shape and size and should be sealable to be airtight and the seal should withstand the temperatures and pressures of the following procedure. Examples of suitable materials include liners made of PTFE, polypropiolactone (PPL), polyether ether ketone (PEEK).

In step d) of the present invention the container of step d) also can comprise an autoclave and the autoclave is sealed under inert conditions. The autoclave is an air-tight sealable container that is designed for heating to elevated temperatures and withstanding high pressures. Typically, they are made of stainless steel and the skilled person would choose the appropriate size of the autoclave for the reaction setup. Bigger autoclaves usually have gas-inlets and/or gas-outlets through which - for instance - inert gas can be introduced or vented. Suitable other types of containers like such made of glass can also be employed in step d).

In step e) the container is heated to a temperature of between 170°C and 250°C, preferably between 200°C and 230°C, especially to 210°C. It was found that the moderate temperature range of up to 250°C is yielding phase pure crystalline titanium disulfide or tantalum disulfide with trigonal 1T structure where the tantalum or titanium cations have an octahedral coordination. Heating of the mixture of step d) to the given temperature range produces a pressure above ambient pressure in the reaction container. The pressure aids the formation of the desired tantalum or titanium disulfide and helps to achieve the crystalline 1T phase of the particles which either form homogeneously or heterogeneously directly on the surface of the substrate.

Phase purity generally refers to the crystal structure of the prepared material. If a material is phase pure, its crystallites all have only one single common crystal structure. On the other hand, if a material is not phase pure, the material shows a concomitant mixture of two or more crystalline phases. The phase purity of a material is usually analysed by powder X-ray diffraction (XRD). A phase pure material, however, can be grown or obtained in different morphologies, i.e. in different shapes of its crystallites. Phase purity of a crystalline material has an influence on the properties of the material, especially on the properties which depend on the specific crystal phase. Like that, phase control plays an important role in the precise synthesis of inorganic materials, as the phase structure has a profound influence on properties such as conductivity and chemical stability. Phase-controlled preparation has been previously challenging for the given disulfides of titanium and especially of tantalum, but with the inventive method excellent phase purity of the prepared crystalline material is achieved.

Generally, the skilled person can determine with simple experiments for how long the heating is applied to obtain the desired phase pure crystal growth of the titanium or tantalum disulfides, either homogeneously or heterogeneously on a substrate. In a preferred embodiment of the present invention the heating in step e) is applied for between 1 h and 84 h, preferably between 3 h and 45 h, more preferably between 4 h and 36 h, most preferably between 4.5 h and 24 h. It was surprisingly found that with choosing the appropriate heating time, the morphology of the grown titanium or tantalum disulfide can be influenced. Shorter heating times, like between 1 h and 4.5 h, were found to result in more "disk"-like morphologies, whereas longer heating times, like for example between 24 h and 48 h, tend to result in more "flower"-like morphologies of the grown crystals. Without being bound to any theory, it is believed that longer heating times show an assembly of the initial "disk"-like morphology into the "flower"-like morphology. This tendence was observed independent of the type of substrate used.

In step f) the titanium sulfide or tantalum sulfide particles are obtained, optionally washed with an organic solvent, and dried.

Generally, as washing solvents alcohols, ketones, aromatic, benzene derivatives, alkanes, alkenes, are preferably used. This step ensures the purity in terms of inorganic and organic residuals, but the formation of phase pure TaS₂ or TiS₂ does not depend on the washing step.

In a preferred embodiment, in step f) the organic solvent for washing is selected from the group of toluene, hexane, ethanol, methanol, isopropanol, and acetone.

In an especially preferred embodiment of the present inventive method the tantalum or titanium precursor is TaCl₅ or TiCl₄, the sulfur source is 1-dodecanethiol or tert.-dodecanethiol, and the molar ratio of the sulfur source to the titanium or tantalum precursor is 20:1.

Although the described method primarily yields the 1T phase, the incorporation of the 2H phase is also claimed within the scope of this invention. The phase transition can potentially be achieved by modifications in the reaction parameters, in particular for TaS₂, which has a thermodynamically favored 2H phase.

The method can allow tuning the number of layers of tantalum sulfide or titanium sulfide on the surface of the substrate, obtaining from a single layer up to a few layers with different thicknesses.

Based on the layered crystal structure of the sulfides, further modifications and processing methods can be applied to reduce the number of layers of the described materials to e.g., monolayers or few layers. Such modifications and processing methods, including but not limited to electrochemical, mechanical, or liquid-phase exfoliation, are considered within this invention.

The present invention also refers to a substrate with a layered crystalline tantalum disulfide or titanium disulfide grown on the substrate according to a method comprising the following steps:
a) Adding a titanium or tantalum precursor to an anhydrous solvent under inert conditions,
b) Adding a sulfur source to the mixture of step a),
c) providing a substrate for heterogeneous growth,
d) transferring the mixture of step b) and optionally the substrate of step c) into a suitable container, under inert conditions and sealing the container,
e) heating the sealed autoclave of step d) to a temperature of between 170°C and 250°C, preferably between 200°C and 230°C, especially to 210°C, and
f) obtaining, optionally washing the titanium sulfide or tantalum sulfide particles grown on the substrate with an organic solvent, and drying.

In step a) a transition metal precursor, i.e. a titanium or tantalum precursor, is added to an anhydrous solvent under inert conditions. Oxygen and/or water in the conditions should be avoided due to formation of unwanted oxides by the presence of oxygen sources resulting in lower purity and lower yield of the desired sulfides. Like that, it is of importance for a high purity and good yield of the desired sulfides to choose an anhydrous solvent and work under inert conditions, i.e. for example under nitrogen or argon atmosphere.

As used herein, the term tantalum precursor can refer to a precursor that can be represented by a chemical formula that includes tantalum. Similarly, the term titanium precursor can refer to a precursor that can be represented by a chemical formula that includes titanium. In some embodiments, the term "precursor" refers generally to a compound that participates in the chemical reaction that produces another compound.

In principle, the transition metal precursor, i.e. the titanium or tantalum precursor, can be any respective transition metal salt or metalorganic compound. The terms metalorganic and organometallic can be used interchangeably and can refer to organic compounds containing a metal species.

In accordance with exemplary embodiments, the tantalum precursor comprises a nitrogen-coordinated compound, such as one or more of amides, imides, and amidinates. In some embodiments, the tantalum metalorganic precursor comprises one or more of amide ligand (e.g., Ta(NEtMe)₅ and Ta(NMe₂)₅) and an imido ligand (e.g., both types of ligands, such as Ta(NtBu)(NEt₂)₃). In some embodiments, the tantalum precursor comprises a heteroleptic compound. A heteroleptic compound can comprise cyclopentadienyl (Cp) and halogen such as chloride, or Cp and alkylamine, or amide and halide, such as chloride. In other embodiments, the tantalum precursor comprises a homoleptic compound. In some embodiments, the tantalum halide precursor may comprise at least one halide ligand while the rest of the ligands are different, such as metalorganic or organometallic ligands as described herein. In some embodiments, the tantalum halide precursor may comprise one, two, three, four, or five halide ligands. In some embodiments, the tantalum metalorganic precursor may comprise at least one of a tantalum alkylamide precursor, a tantalum cyclopentadienyl-ligand containing precursor, or other metalorganic tantalum precursors. In some embodiments of the disclosure, the tantalum precursor comprises one or more bidentate ligands which are bonded to tantalum through nitrogen and/or oxygen atoms. In some embodiments, the tantalum precursor comprises one or more ligands which are bonded to tantalum through nitrogen, oxygen, and/or carbon. In some embodiments, the tantalum precursor is not halide. In some embodiments, the tantalum precursor does not comprise a halogen. In some embodiments, a ligand can include one or more of an alkoxo, an amidinate, and/or a pyrazolate group.

In accordance with exemplary embodiments, the titanium precursor comprises a nitrogen-coordinated compound, such as one or more of amides, imides, and amidinates. In some embodiments, the titanium metalorganic precursor comprises one or more of amide ligand (e.g., Ti(NEtMe)₄ and Ti(NMe₂)₄) and an imido ligand. In some embodiments, the titanium precursor comprises a heteroleptic compound. A heteroleptic compound can comprise Cp and halogen such as chloride, or cyclopentadienyl (Cp) and alkylamine, or amide and halide, such as chloride. In other embodiments, the titanium precursor comprises a homoleptic compound. In some embodiments, the titanium halide precursor may comprise at least one halide ligand while the rest of the ligands are different, such as metalorganic or organometallic ligands as described herein. In some embodiments, the titanium halide precursor may comprise one, two, three, or four halide ligands. In some embodiments, the titanium metalorganic precursor may comprise at least one of a titanium alkylamide precursor, a titanium cyclopentadienyl-ligand containing precursor, or other metalorganic titanium precursors. In some embodiments of the disclosure, the titanium precursor comprises one or more bidentate ligands which are bonded to titanium through nitrogen and/or oxygen atoms. In some embodiments, the titanium precursor comprises one or more ligands which are bonded to titanium through nitrogen, oxygen, and/or carbon. In some embodiments, the titanium precursor is not halide. In some embodiments, the titanium precursor does not comprise a halogen. In some embodiments, a ligand can include one or more of an alkoxo, an amidinate, and/or a pyrazolate group.

In a preferred embodiment of the present invention the titanium or tantalum precursor is selected from the group consisting of respective halides and metal-organic compounds. Preferred examples are TaCl₅, TaF₅, Tal₅, TaBr₅, Tantalum (V) (tetraethoxy)(acetylacetonate), Tantalum (V) butoxide, Tantalum (V) ethoxide, Tantalum tetraethoxy dimethylaminoethoxide, Pentakis(dimethylamino) tantalum (V), Tris(diethylamido)(ethylimido)tantalum (V), t-Amylimidotris (dimethylamido) tantalum (V), tert-Butylimidotris(dimethylamido)tantalum (V), Titanium (IV) chloride, Titanium (IV) fluoride, Titanium (IV) bromide, Titanium (IV) iodide, TiF₃, Titanyl acetylacetonate, Tris(acetylacetonato)titanium (III), Titanium (IV) ethoxide, Titanium (IV) isopropoxide, Tetrakis(dimethylamido)titanium (IV), Titanium (IV) butoxide, Tetrakis(ethylmethylamido)titanium (IV), to name but a few.

Other suitable compounds include changing the alkyl substituent(s) in amido or imido ligands of any of the above compounds. Suitable tantalum precursors or titanium can be selected from any combination or subset (e.g., one or more, two or more, and the like) of the above exemplary tantalum or titanium precursors.

As an anhydrous solvent, any at room temperature liquid fluid is understood that is free of water. In a preferred embodiment, the anhydrous solvent of step a) is selected from the group consisting of hydrocarbons, and especially aromatic hydrocarbons. Suitable examples are toluene, benzene, xylene, and mesitylene.

The addition of step a) of the titanium or tantalum precursor to the anhydrous solvent can result in being a solution, a dispersion, or a suspension. However, it is preferred to choose such solvents and conditions that a very good distribution of the titanium or tantalum precursor within the solvent is achieved, preferably a solution.

In step b) of the inventive method a sulfur source is added to the mixture of step a), i.e. to the mixture of titanium or tantalum precursor and anhydrous solvent.

As used herein, the term sulfur source can refer to any sulfur-containing organic compound, preferably to a sulfur-organic compound with one or more than one sulfur-containing group, as for example a thiol, a dithiol, a sulfide or a disulfide.

In a preferred embodiment of the present invention the sulfur source is an organic thiol, an organic dithiol, or an organic disulfide. These compounds have been found very useful in the solvothermal method of the present invention as they show a good mixing and distribution behaviour in anhydrous solvents, preferably they dissolve in the anhydrous solvent used. Like that, it is possible to have quite low reaction times for the formation of the desired titanium or tantalum sulfides, making the method interesting also for application in industrial scale.

Preferably, the carbon chain of the organic sulfur source has between 3 and 15 carbons. Again, good solubility in the anhydrous solvent is advantageous. Further, the organic sulfur-containing compounds with 3 to 15 carbons are less toxic than such sulfur-sources like CS₂ or H₂S, which are widely used in prior art methods.

In addition, it has been surprisingly found that the morphology of the resulting crystalline titanium or tantalum sulfide can be influenced by the choice of the sulfur source. Loner chain organic sulfur-containing compounds or such compounds with a more branched chain like tertiary chains versus primary chains have been found to give more "flower"-like morphology versus a more "disk"-like morphology of the particles when primary chains of the same length or shorter length chains in the sulfur source compound were used.

In another preferred embodiment of the present invention the sulfur source is selected from the group of 1-dodecanethiol, 1-undecanehiol, 1-decanethiol. 1-nonanethiol, 1-octanethiol, 1-heptanethiol, 1-hexanethiol, 1-pentanethiol, tert.-dodecanethiol, tert.-undecanethiol, tert.-decanethiol, tert.-nonanethiol, sec.-dodecanethiol, sec.-undecanethiol, sec.-decanethiol, sec.-nonanethiol, sec.-octanethiol, dimethyl disulfide, diethyl disulfide, di-tert-butyl disulfide, propyl disulfide, dipropyl di-sulfide, hexyl disulfide, isopentyl disulfide, diisoamyl disulfide, 1,2-ethanedithiol, 1,4-butanedithiol, 1,5-pentanedithiol, 1,6-hexanedithiol, 1,8-octanedithiol, 1,10-decanedithiol, 1,11-undecanedithiol.

In a preferred embodiment of a substate of the present invention, in step b) of the method for its preparation the sulfur source is chosen from the group of unbranched organic thiols, dithiols, sulfides, or disulfides with a carbon chain of between 8 and 15 carbon atoms.

The use of unbranched organic sulfur sources with a relatively longer carbon chain generally results in more "disk-like" morphologies.

In an alternative embodiment of a substate of the present invention, in step b) of the method for its preparation the sulfur source is chosen from the group of branched organic thiols, dithiols, sulfides, or disulfides with a carbon chain of be-tween 8 and 15 carbon atoms, and unbranched organic thiols, dithiols, sulfides, or disulfides with a carbon chain of between 3 and 7 carbon atoms.

The use of branched organic sulfur sources with a relatively longer carbon chain, or of unbranched organic sulfur sources with a relatively shorter carbon chain generally results in more "flower-like" morphologies.

In experiments, it was shown that when utilizing 1-dodecanethiol as the sulfur source to obtain TaS₂ particles, as described in step b), TaS₂ particles were obtained on the surface of a carbon cloth at a reaction time of 4.5 h with a structure of individual "nano-disks". Such "nano-disks" have a diameter of ca. 500 nm with a thickness of around 40 nm. Nonetheless, it was found that the change in the sulfur source also corresponds to a way of controlling the morphology of the TaS₂ particles. By using the carbon cloth as the substrate and replacing 1-dodecanethiol by tert-dodecanethiol, the TaS₂ particles synthesized at a reaction time of 4.5 h are composed of "flower-like" structures with a diameter of 500 nm instead of individual "nano-disks". Longer reaction times result in bigger assemblies where the diameter of the "flower-like" structure is around 2.7 µm.

Preferably, the sulfur source in step b) is added under stirring for good distribution and mixing with the titanium or tantalum precursor. Inert conditions are to be upheld while adding the sulfur source to the mixture of step a).

In a preferred embodiment of the present inventive method the molar ratio of the sulfur source to the tantalum or titanium precursor is between 2:1 and 60:1, preferably between 10:1 and 30:1, more preferably around 20:1. A notable excess amount of the sulfur source over the molar amount of the metal precursor should be used in the solvothermal reaction of the invention in order to facilitate the reaction taking place and facilitate formation of the crystalline disulfide.

In step c) a substrate is introduced into the mixture of step b) for heterogeneous growth. Again, inert conditions should be observed while introducing the substrate.

As used herein, the term substrate can refer to any underlying material or materials upon which a layer can be deposited. A substrate can include a bulk material, such as silicon (e.g., single-crystal silicon), carbon cloth, or other semiconductor material, or a metal, such as gold, and can include one or more layers, such as native oxides or other layers, overlying or underlying the bulk material. Further, the substrate can include various topologies, such as recesses, lines, and the like formed within or on at least a portion of a layer and/or bulk material of the substrate. By way of particular examples, a substrate may comprise one or more materials including, but not limited to, carbon, silicon (Si), germanium (Ge), germanium tin (GeSn), silicon germanium (SiGe), silicon germanium tin (SiGeSn), silicon carbide (SiC), or a group III-V semiconductor material, such as, for example, gallium arsenide (GaAs), gallium phosphide (GaP), or gallium nitride (GaN). In some embodiments, the substrate may comprise one or more dielectric materials including, but not limited to, oxides, nitrides, or oxynitrides. For example, the substrate may comprise a silicon oxide (e.g., SiO₂), a metal oxide (e.g., Al₂O₃), a silicon nitride (e.g., Si₃N₄), or a silicon oxynitride. In some embodiments of the disclosure, the substrate may comprise an engineered substrate wherein a surface semiconductor layer is disposed over a bulk support with an intervening buried oxide (BOX) disposed therebetween. Patterned substrates can include features formed into or onto a surface of the substrate, for example, a patterned substrate may comprise partially fabricated semiconductor device structures, such as, for example, transistors and/or memory elements. In some embodiments, the substrate may contain monocrystalline surfaces and/or one or more secondary surfaces that may comprise a non-monocrystalline surface, such as a polycrystalline surface and/or an amorphous surface. Monocrystalline surfaces may comprise, for example, one or more of silicon, silicon germanium, germanium tin, germanium, or a III-V material. Polycrystalline or amorphous surfaces may include dielectric materials, such as oxides, oxynitrides, or nitrides, such as, for example, silicon oxides and silicon nitrides.

In a preferred embodiment of the present invention the substrate is a conductive or non-conductive material, and is preferably selected from the group consisting of borosilicate glass, silicon wafer, Si₃N₄-coated Si wafer, sapphire wafer, mica wafer, fluorine doped tin oxide glass (FTO), gold coated FTO, glassy carbon, carbon cloth, metallic Ta plate electrode, Au foil, stainless-steel plate electrode, gold coated substrates, gallium arsenide wafer, indium tin oxide (ITO) coated glass, carbonaceous electrode, graphite coated substrate.

The substrates generally decrease the energy barrier for the nucleation and crystallization of the disulfide particles; hence, the resulting TaS₂ or TiS₂ exhibits high crystallinity even in short reaction times for a solvothermal method.

The use of different types of substrates also can be used to control the morphology of the titanium or tantalum sulfide grown onto their surface. The use of Au-coated FTO glass, for example was found to cause the formation of a film layer structure of tantalum disulfide on the glass surface. The use of other substrate types, however, does not lead to a film formation. Instead, the TaS₂ particles grown on the Si/SiO₂ substrate surface are homogeneously dispersed in a "flower"-like morphology. Using a carbon cloth substrate resulted in a "nano-disk"-like built of the particles with relatively short reaction times, while for longer reaction times they assemble into a 3D "flower"-like morphology. TaS₂ particles grown on FTO glass or Si₃N₄-coated Si wafer as a substrate corresponded to the "nano-disk"-like morphology. The possibility to finely control the morphology of the TaS₂ particle growth, their size and arrangement on the substrate surface is highly beneficial for the desired use of the material for example as quantum material, electrocatalyst for hydrogen and oxygen evolution reactions, as optoelectronic and memory devices, supercapacitors, charge-density-wave oscillators, sensors, and spintronic devices. TiS₂ particles growth with a method of the present invention can be used with the same advantages in rechargeable sodium and lithium ion batteries.

In step d) the mixture of step b) and the substrate of step c) is transferred into a suitable container, under inert conditions and the container is sealed.

The container can be of any suitable shape and size and should be sealable to be airtight and the seal should withstand the temperatures and pressures of the following procedure. Examples of suitable materials include liners made of PTFE, polypropiolactone (PPL), polyether ether ketone (PEEK).

In step d) of the present invention the container of step d) also can comprise an autoclave and the autoclave is sealed under inert conditions. The autoclave is an air-tight sealable container that is designed for heating to elevated temperatures and withstanding high pressures. Typically, they are made of stainless steel and the skilled person would choose the appropriate size of the autoclave for the reaction setup. Bigger autoclaves usually have gas-inlets and/or gas-outlets through which - for instance - inert gas can be introduced or vented. Suitable other types of containers like such made of glass can also be employed in step d).

In step e) the container is heated to a temperature of between 170°C and 250°C, preferably between 200°C and 230°C, especially to 210°C. It was found that the moderate temperature range of up to 250°C is yielding phase pure crystalline titanium disulfide or tantalum disulfide with trigonal 1T structure where the tantalum or titanium cations have an octahedral coordination. Heating of the mixture of step d) to the given temperature range produces a pressure above ambient pressure in the reaction container. The pressure aids the formation of the desired tantalum or titanium disulfide and helps to achieve the crystalline 1T phase of the particles which either form homogeneously or heterogeneously directly on the surface of the substrate.

Phase purity generally refers to the crystal structure of the prepared material. If a material is phase pure, its crystallites all have only one single common crystal structure. On the other hand, if a material is not phase pure, the material shows a concomitant mixture of two or more crystalline phases. The phase purity of a material is usually analysed by powder X-ray diffraction (XRD). A phase pure material, however, can be grown or obtained in different morphologies, i.e. in different shapes of its crystallites. Phase purity of a crystalline material has an influence on the properties of the material, especially on the properties which depend on the specific crystal phase. Like that, phase control plays an important role in the precise synthesis of inorganic materials, as the phase structure has a profound influence on properties such as conductivity and chemical stability. Phase-controlled preparation has been previously challenging for the given disulfides of titanium and especially of tantalum, but with the inventive method excellent phase purity of the prepared crystalline material is achieved.

Generally, the skilled person can determine with simple experiments for how long the heating is applied to obtain the desired phase pure crystal growth of the titanium or tantalum disulfides, either homogeneously or heterogeneously on a substrate. In a preferred embodiment of the present invention the heating in step e) is applied for between 1 h and 84 h, preferably between 3 h and 45 h, more preferably between 4 h and 36 h, most preferably between 4.5 h and 24 h. It was surprisingly found that with choosing the appropriate heating time, the morphology of the grown titanium or tantalum disulfide can be influenced. Shorter heating times, like between 1 h and 4.5 h, were found to result in more "disk"-like morphologies, whereas longer heating times, like for example between 24 h and 48 h, tend to result in more "flower"-like morphologies of the grown crystal layers. Without being bound to any theory, it is believed that longer heating times show an assembly of the initial "disk"-like morphology into the "flower"-like morphology. This tendence was observed independent of the type of substrate used.

The morphology of the particles and their arrangement on the substrates thus can be tuned and controlled, for example, by changing synthetic parameters like the reaction time leading to sulfide layers on the substrate surface with different sizes and morphologies. When the carbon cloth is used as a substrate, the TaS₂ particles, after 4.5 h reaction time, have a morphology similar to disks, which, in some cases, can assemble with other disk-like structures. Such "nano-disks" have a diameter of ca. 500 nm with a thickness of around 40 nm. By increasing the reaction time to 58 h, the TaS₂ particles have a "flower-like" structure, corresponding to the assemblies of the initial "disk-like" structures. The diameter of the "flower-like" structure is around 2.7 µm, which confirms that not only the morphology of the particles changed but also the size.

The control of the reaction time also leads to changes in the morphological features of the TaS₂ particles if the Au-coated FTO glass is used as the substrate. By employing a reaction time of only 3 hours, the particles are homogeneously deposited all over the surface of the Au layer with a morphology of interconnected nanosheet-like structures. Nonetheless, if the reaction time is increased to 24h, the film on the surface of the Au layer is composed of thicker and bigger nanosheet-like structures. Moreover, additional TaS₂ particles assembled in flower-like structures are seen on the top part of the TaS₂ film.

Thus, in a preferred embodiment of the invention a substrate is encompassed wherein in step e) of the method for its preparation the heating is applied for between 1 h and 8 h, preferably between 2 h and 5h.

This results in a more "disk-like" morphology of the grown tantalum sulfide or titanium sulfide particles on the surface of the substrate.

In an alternative embodiment of the invention a substrate is encompassed wherein in step e) of the method for its preparation the heating is applied for between 12 h and 84 h, preferably between 24 h and 58 h.

This results in a more "flower-like" morphology of the grown tantalum sulfide or titanium sulfide particles on the surface of the substrate.

In step f) the titanium sulfide or tantalum sulfide particles are obtained, optionally washed with an organic solvent, and dried.

Generally, as washing solvents alcohols, ketones, aromatic, benzene derivatives, alkanes, alkenes, are preferably used. This step ensures the purity in terms of inorganic and organic residuals, but the formation of phase pure TaS₂ or TiS₂ does not depend on the washing step.

In a preferred embodiment, in step f) the organic solvent for washing is selected from the group of toluene, hexane, ethanol, methanol, isopropanol, and acetone.

The inventive substrate has distinct advantages over the substrates that are previously described. Not only can the morphology of the layered crystalline tantalum or titanium disulfide be finely controlled in a very versatile manner by tuning of the various reaction parameters and by the choice of the substrate, but also the adhesion of the formed disulfide particles on the substrate is improved by the direct growth on its surface. To give an example, for electrochemical applications, such as the electrocatalytic evolution of hydrogen and oxygen or supercapacitors, TaS₂, as the active material, grows directly on the electrode material, which is a conductive substrate. Consequently, the step of transferring and anchoring the synthesized active material to the electrode by using a proton-conductive binder is needless. The inventive approach improves the adhesion between active material and substrate, which avoids degradation during operation and improves the stability and long-term performance of e.g. the electrode. In addition, the direct growth of TaS₂ or TiS₂ on the substrate also allows a fast and direct charge transfer between the substrate and active material that enhances the overall performance. Moreover, the process is scalable so that industrial applicability and thus, industrial scale production of the inventive substrate is possible.

Although the described method primarily yields the 1T phase, the incorporation of the 2H phase is also claimed within the scope of this invention. The phase transition can potentially be achieved by modifications in the reaction parameters, in particular for TaS₂, which has a thermodynamically favored 2H phase.

Based on the layered structure of the sulfides, further modifications and processing methods can be applied to reduce the number of layers of the described materials to e.g., monolayers or few layers. Such modifications and processing methods, including but not limited to electrochemical, mechanical, or liquid-phase exfoliation, are considered within this invention.

Further, the present invention also comprises the use of a layered crystalline tantalum disulfide produced according to a method described above as inventive as quantum material, electrocatalyst for hydrogen and oxygen evolution reactions, optoelectronic and memory device, supercapacitor, charge-density-wave oscillator, transistors, in micro-electromechanical systems (MEMS), sensor material, or spintronic device, or the use of a layered crystalline titanium disulfide produced according to a method described above as inventive in a rechargeable sodium or lithium ion battery.

In the following, some specific examples are described to illustrate the multiple possibilities to design the morphology and influence the growth of the desired titanium or tantalum disulfide particles on various substrates and with variation of reaction parameters.
Fig. 1 is a flow-scheme presentation of the steps of the present method,
Fig. 2 is the X-ray diffraction (XRD) patterns of a tantalum disulfide prepared in one embodiment of the present invention and bare carbon cloth,
Figure 3 is the scanning electron microscopy (SEM) images of the bare carbon cloth prior to the solvothermal reaction.,
Figure 4 is the scanning electron microscopy (SEM) images of the TaS₂ grown on the carbon cloth of figure 3,
Figure 5 is the scanning electron microscopy (SEM) images of TaS₂ grown on the carbon cloth of figure 3 with a longer reaction time than in the embodiment of figure 4,
Figure 6 is the scanning electron microscopy (SEM) images of TaS₂ particles grown on a carbon cloth substrate according to another embodiment of the present invention,
Figure 7 is the X-ray diffraction (XRD) patterns of TaS₂ grown on Si/SiO₂ wafers as substrates according to another embodiment of the present invention,
Figure 8 is the scanning electron microscopy (SEM) image of the TaS₂ grown on Si/SiO₂ wafers of Figure 7,
Figure 9 is the X-ray diffraction (XRD) patterns of TaS₂ grown on Au-coated FTO according to another embodiment of the present invention, and of bare Au-coated FTO substrate,
Figure 10 is the scanning electron microscopy (SEM) image of the TaS₂ grown on Au-coated FTO according to another embodiment of the present invention,
Figure 11 is the scanning electron microscopy (SEM) image of the TaS₂ grown on Au-coated FTO as in the embodiment of figure 9,
Figure 12 is the scanning electron microscopy (SEM) image of the TaS₂ grown on FTO according to another embodiment of the present invention,
Figure 13 is the X-ray diffraction (XRD) patterns of TaS₂ grown on glassy carbon plate as a substrate according to another embodiment of the present invention, and of bare glassy carbon plate,
Figure 14 is the scanning electron microscopy (SEM) images of the TaS₂ grown on a glassy carbon plate as in the embodiment of figure 13,
Figure 15 is the X-ray diffraction (XRD) pattern of TaS₂ grown on a sapphire wafer according to another embodiment of the present invention,
Figure 16 is the scanning electron microscopy (SEM) images of the TaS₂ grown on a sapphire wafer of the embodiment of figure 15,
Figure 17 is the X-ray diffraction (XRD) patterns of TaS₂ grown on a Si₃N₄ -coated Si wafer according to another embodiment of the present invention, and of bare Si₃N₄ -coated Si wafer,
Figure 18 is the scanning electron microscopy (SEM) images of the TaS₂ grown on a Si₃N₄ - coated Si wafer as in figure 17,
Figure 19 is the X-ray diffraction (XRD) patterns of TaS₂ grown on a metallic Ta plate according to another embodiment of the present invention,
Figure 20 is the scanning electron microscopy (SEM) images of the TaS₂ grown on a metallic Ta plate as in figure 19,
Figure 21 is the X-ray diffraction (XRD) pattern of TiS₂ powder synthesized according to another embodiment of the present invention without using any substrate, and
Figure 22 is the scanning electron microscopy (SEM) images of the TiS₂ particles of figure 21.

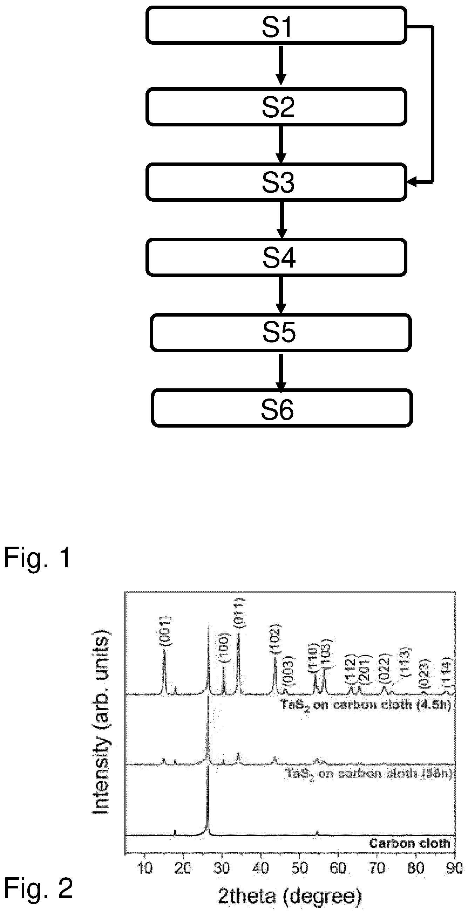

In figure 1 a flow-scheme is shown to illustrate the steps of the method for the preparation of titanium disulfide or tantalum disulfide according to the present invention.

As shown in figure 2, the peaks in the XRD patterns of the products grown in the carbon cloth for 4.5 h or 58 h match well with the diffraction peaks of trigonal TaS₂, except for those coming from the bare carbon cloth. Regardless of the short or long reaction times, the solvothermal method successfully yields TaS₂, and the features from the carbon cloth are preserved after the reaction, which confirms that the substrate is not damaged during the reaction.

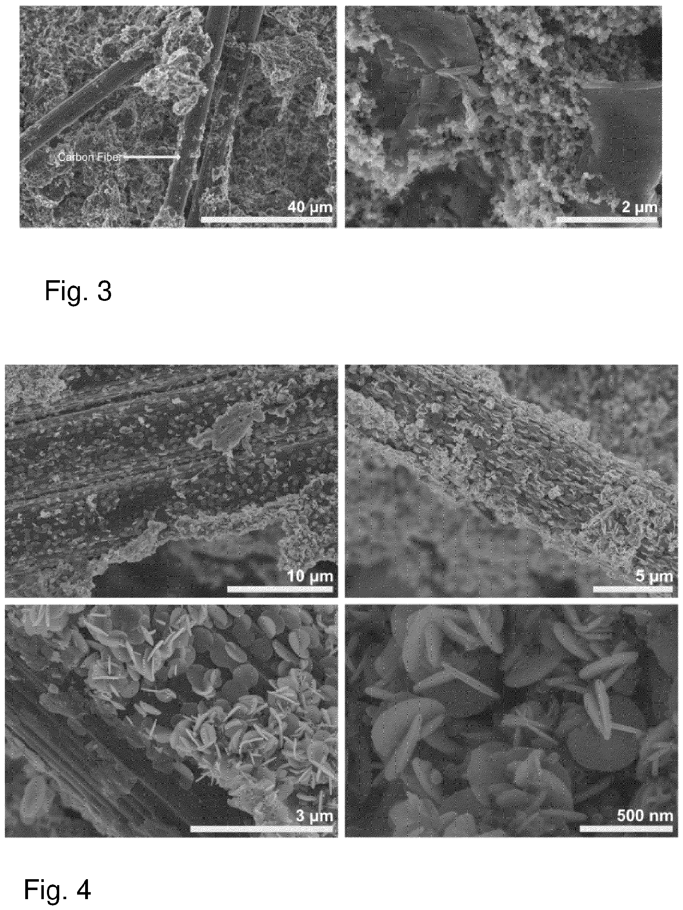

As shown in figure 3, SEM images indicate that the bare carbon cloth before the solvothermal reaction is composed of fibers and nanoparticles, as expected, given that AvCarb P75T is a carbon particle-filled, polyacrylonitrile based carbon fiber paper. The picture on the left shows the carbon fibers filled with the particles. The picture on the right further elucidates the morphological features of the filling carbon nanoparticles.

As shown in figure 4, the TaS₂ particles grow on the carbon cloth and show distinguished features compared to the bare carbon cloth. The particles' morphologies are tuned according to the reaction time. The images correspond to the TaS₂ particles produced after 4.5h reaction time. The particles correspond to "nano-disks", which assemble to some extent. Such "nano-disks" have a diameter of ca. 500 nm with a thickness of around 40 nm. It is important to note that the TaS₂ particles can be distinguished from the particles and fibers that compose the bare carbon cloth from Figure 3.

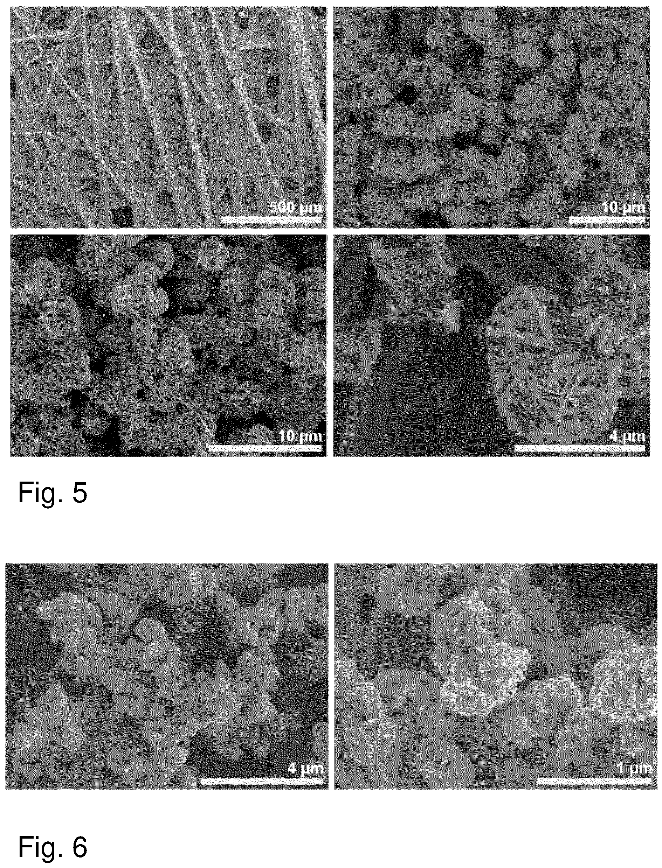

In figure 5, the TaS₂ particles grown on the carbon cloth after 58h reaction time exhibit a distinguished morphology. Due to the increase in the reaction time, the nano-disks assemble into a "flower-like" structure with a diameter of around 2.7 µm. The thickness of the individual disk or sheet-like structures is about 75 nm. These observations confirm that the morphology and size of the TaS₂ particles can be tuned by adjusting the reaction time.

In figure 6, the photograph shows the comparison of a new carbon cloth (left) and the carbon cloth after the inventive solvothermal reaction for 4.5 h containing TaS₂ particles (right). It is evidenced there is no damage to the substrate due to the reaction conditions.

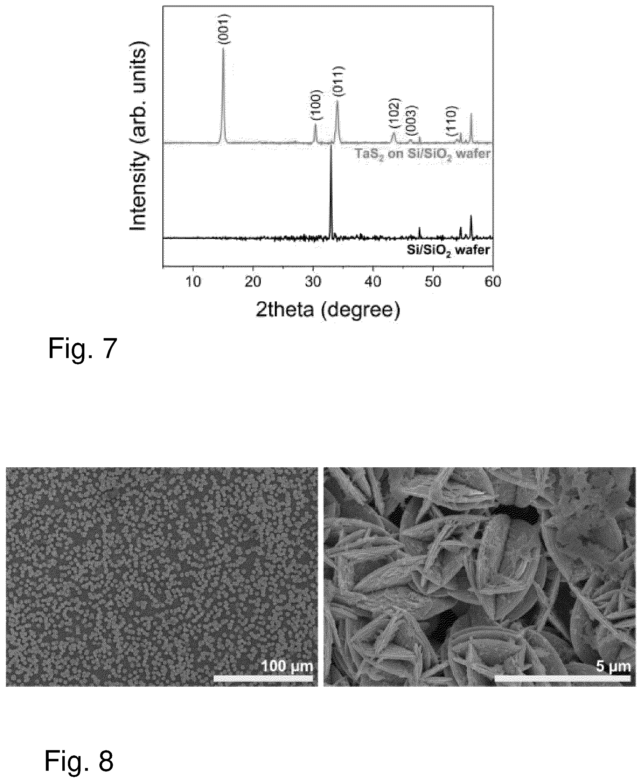

Figure 7 presents the TaS₂ particles synthesized by replacing the sulfur source from 1-dodecanethiol to tert-dodecanethiol. For comparison purposes, the carbon cloth was used as the substrate and the reaction time was 4.5 h. The morphology of the TaS₂ particles corresponds to "flower"-like structures with ca.500 nm diameter. The change in the sulfur source to tert-dodecanethiol changed the morphology from "disk"-like to "flower"-like morphology, confirming that the synthesis can be tuned according to the synthetic parameters, such as the modification of the sulfur source.

As shown in Figure 8, the peaks in the XRD patterns of the product grown on the Si/SiO₂ wafer for 48 h match well with the diffraction peaks of trigonal TaS₂, except for those coming from the wafer.

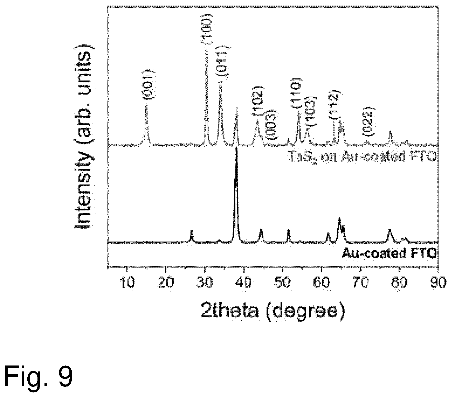

The TaS₂ particles grown on the Si/SiO₂ wafer for 48 h are shown in Figure 9. The particles have a "flower"-like morphology.

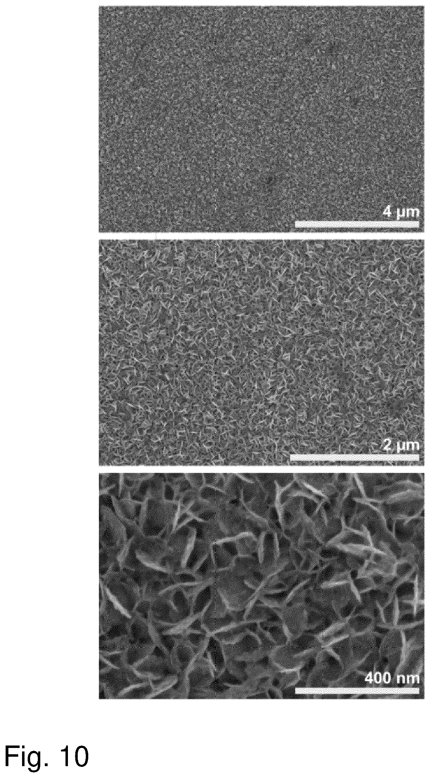

As shown in figure 10, the peaks in the XRD patterns of the product grown on Au-coated FTO glass for 24 h match well with the diffraction peaks of trigonal TaS₂, except for those coming from the substrate. The diffraction peaks from the substrate are still visible after the solvothermal reaction, which indicates that the substrate is not damaged due to the reaction conditions.

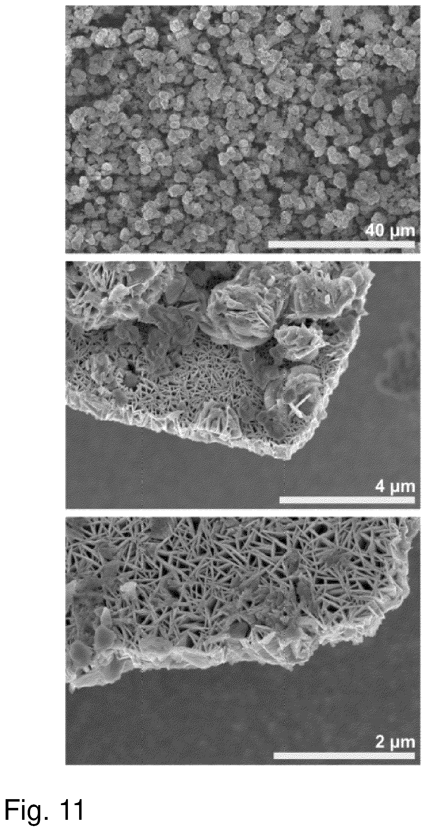

As shown in figure 11, the TaS₂ particles grow on Au-coated FTO glass after 3h reaction time. The particles are homogeneously deposited all over the surface of the Au layer with a morphology of interconnected nanosheet-like structures. These structures are thinner and smaller than those observed for longer reaction times using the same substrate.

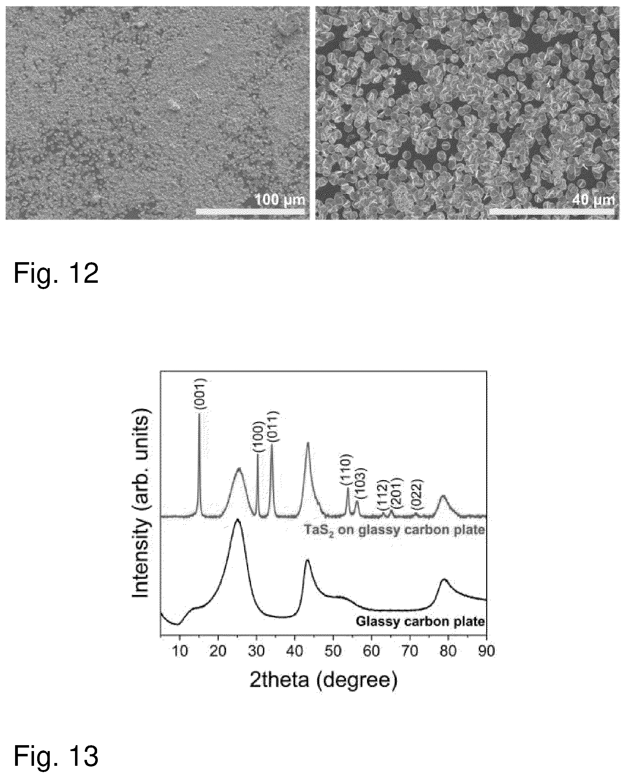

Figure 12 displays the TaS₂ structures grown on Au-coated FTO glass by using a reaction time of 24 h. The nanosheet-like structures are aligned perpendicularly to the substrate and form a film layer. On the top part of such film, TaS₂ particles assemble in a three-dimensional structure similar to flowers.

As depicted in figure 13, the TaS₂ particles grow on non-coated FTO glass after 48 h reaction time. The TaS₂ particles have a disk-like morphology and it is confirmed that different morphologies can also be obtained depending on the substrate.

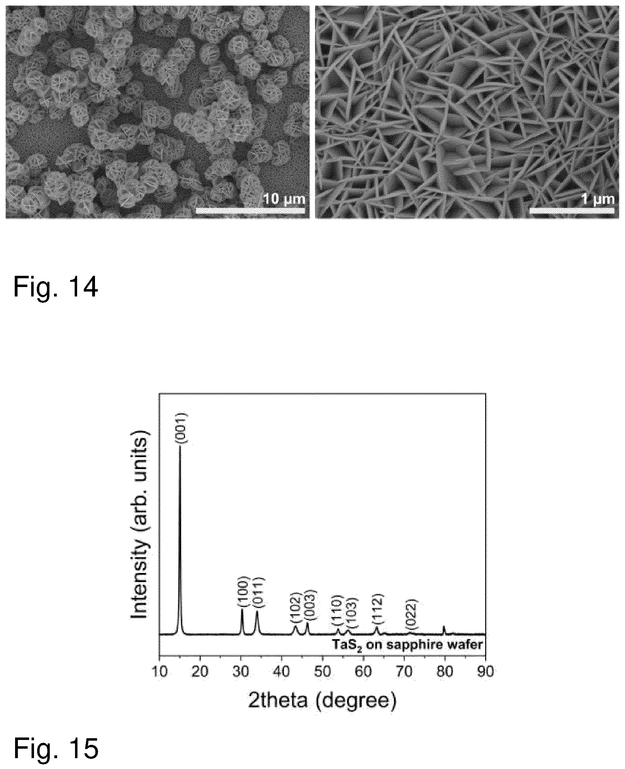

As depicted in figure 14, the peaks in the XRD pattern of the TaS₂ grown on a glassy carbon plate for 3 h correspond to the diffraction peaks of trigonal TaS₂. Additional broad reflections are also seen due to the contribution of the substrate.

The TaS₂ particles formed on a glassy carbon plate as a substrate using a 3-hour reaction time are depicted in figure 15. The particles are homogeneously deposited all over the surface of the substrate similar to a film. In addition, the TaS₂ "nano-disk" particles assemble in a three-dimensional flower-like structure on top of the uniform film.

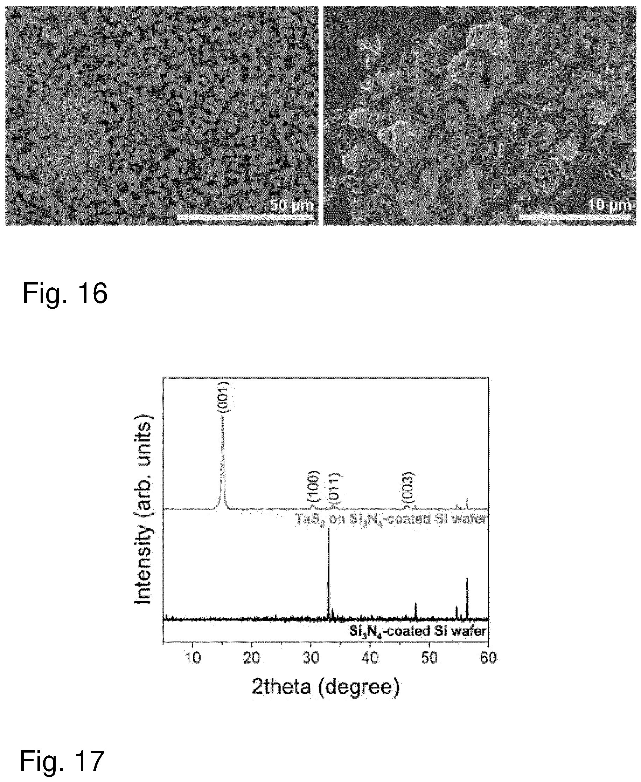

The XRD pattern of the TaS₂ particles formed on a sapphire wafer for 3 h is shown in figure 16. The diffraction peaks correspond solely to the trigonal phase of TaS₂ since the substrate does not present any reflections. The TaS₂ particles have high crystallinity.

In Figure 17, the TaS₂ particles on a sapphire wafer, obtained at a 3-hour reaction time, exhibit a flower-like morphology. The particles directly in contact with the substrate surface have a disk-like morphology, which assembles into a three-dimensional structure, resulting in the flower-like structures.

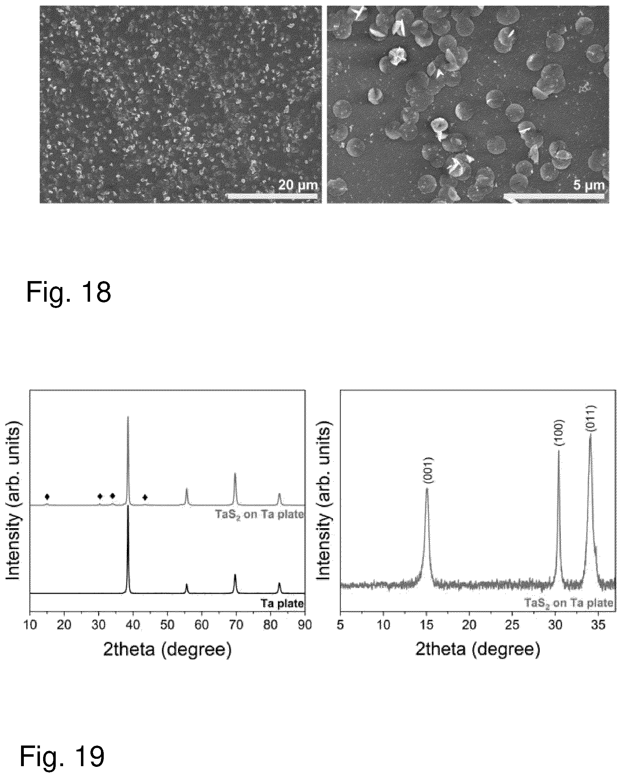

As shown in figure 18, the peaks in the XRD pattern of the TaS₂ product grown on the Si₃N₄-coated Si wafer match well with the diffraction peaks of trigonal TaS₂, except for those coming from the Si₃N₄-coated Si wafer. The thickness of the Si₃N₄ layer is 500 nm, suggesting that the TaS₂ formation is due to the Si₃N₄ on the surface and not because of the Si wafer.

As shown in figure 19, the TaS₂ particles grow on the Si₃N₄-coated Si wafer after a 3 h reaction time and are well-dispersed on the substrate's surface. The particles have a morphology that corresponds to "nano-disks" with an average diameter of 860 nm. To some extent, the initial assembly of the "nano-disks" is seen.

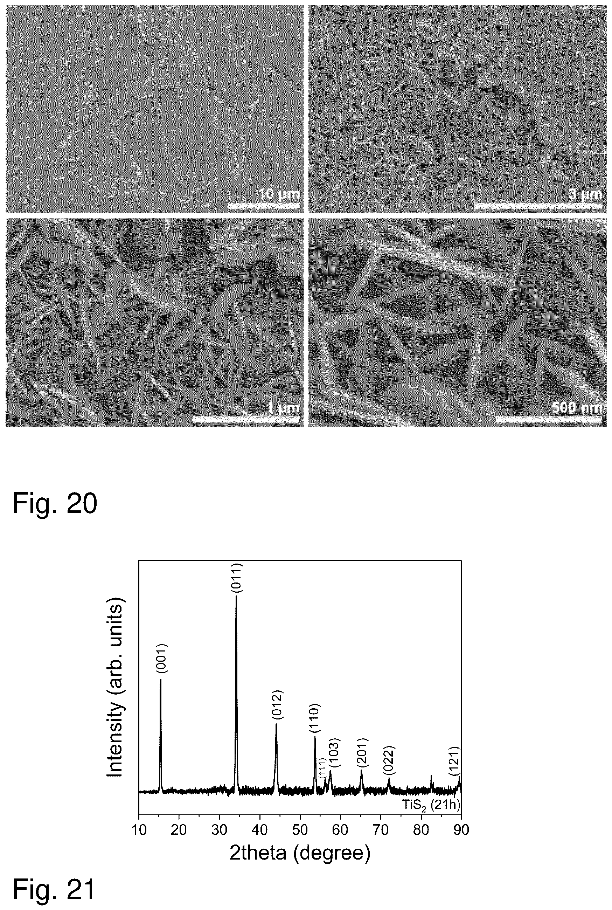

In figure 20, the XRD pattern of TaS₂ particles grown on metallic Ta plate for 3 hours shows dominant diffraction peaks of metallic Ta, resulting in a pattern similar to that of the bare Ta plate (left). However, small reflections, which are indicated by the diamond symbol, correspond to the trigonal phase of TaS₂ and are better visualized in the enlargement of the XRD pattern at low 2theta values (right).

Figure 21 displays the TaS₂ structures grown on a metallic Ta plate by using a reaction time of 3 h. The TaS₂ particles completely cover the substrate's surface, forming a film layer composed of assemblies of TaS₂ particles with a "nano-disk" morphology.

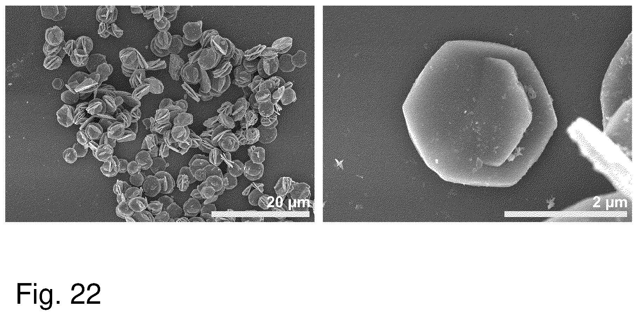

Figure 22 shows the X-ray diffraction (XRD) pattern of TiS₂ powder synthesized at a reaction time of 21 h at 230 °C without using any substrate. As depicted in figure 22, the peaks in the XRD pattern of the product synthesized at 230 °C for 21 h are indexed to the trigonal phase of titanium disulfide (1T-TiS₂).

Figure 23 illustrates the scanning electron microscopy (SEM) images of the TiS₂ particles obtained at 230 °C for 21 h with no substrate. The TiS₂ particles are composed mostly of hexagonal plates. The hexagonal-shaped particles assemble to a certain extent.

The variety of substrates shown in the figures and described above evidences the versatility of the inventive method for growing TaS₂ or TiS₂ on substrates with different properties, e.g., flat or with a three-dimensional porosity, amorphous or crystalline, flexible etc.

The TaS₂ particles form on borosilicate glass, glassy carbon, fluorine doped tin oxide (FTO) glass, gold (Au)-coated FTO, silicon wafer (Si/SiO₂), carbon cloth (AvCarb P75T), Ta metal plate, Si₃N₄-coated Si wafer, and sapphire wafer. The morphology of the particles and their arrangement on the substrates can be tuned and controlled, for example, by changing synthetic parameters. The reaction time is one parameter that can be adjusted to promote the growth of particles with different sizes and morphologies. When the carbon cloth is used as a substrate, the TaS₂ particles, after 4 h 30 min reaction time, have a morphology similar to disks, which, in some cases, can assemble with other disk-like structures. Such "nano-disks" have a diameter of ca. 500 nm with a thickness of around 40 nm. By increasing the reaction time to 58 h, the TaS₂ particles have a "flower-like" structure, corresponding to the assemblies of the initial "disk-like" structures. The diameter of the "flower-like" structure is around 2.7 µm, which confirms that not only the morphology of the particles changed but also the size.

The control of the reaction time also leads to changes in the morphological features of the TaS₂ particles if the Au-coated FTO glass is used as the substrate. By employing a reaction time of only three hours, the particles are homogeneously deposited all over the surface of the Au layer with a morphology of interconnected nanosheet-like structures. Nonetheless, if the reaction time is increased to 24h, the film on the surface of the Au layer is composed of thicker and bigger nanosheet-like structures. Moreover, additional TaS₂ particles assembled in flower-like structures are seen on the top part of the TaS₂ film.

The main method can utilize 1-dodecanethiol as the sulfur source to obtain TaS₂ particles, as described among other possible sulfur sources. Nonetheless, the change in the sulfur source also corresponds to a way of controlling the morphology of the disulfide particles. By using the carbon cloth as the substrate and replacing 1-dodecanethiol by tert-dodecanethiol, the TaS₂ particles synthesized at a reaction time of 4 h 30 min are composed of flower-like structures with a diameter of 500 nm instead of individual nano-disks.

Therefore, the synthetic parameters, such as reaction time, sulfur source or tantalum or titanium precursor, reaction temperature, can be changed and adjusted to control the desired morphology of the disulfide particles, making the inventive method a versatile way for morphology control.

Moreover, the use of different types of substrates also results in different disulfide structures adhering to their surface. The use of the Au-coated FTO glass causes the formation of a film layer of TaS₂ structures on the substrate's surface. The use of other substrates does not lead to a film formation. Instead, the TaS₂ particles grown on the Si/SiO₂ are homogeneously dispersed in a flower-like morphology. Using the carbon cloth results first in "nano-disk" structures, which, over longer reaction times, assemble into a 3D "flower-like" structure. Finally, the TaS₂ particles formed on the FTO glass or Si₃N₄-coated Si wafer also correspond to nano-disk-like structures.

The potential applications of TaS₂ particles include their use as quantum materials, electro-catalysts for hydrogen and oxygen evolution reactions, optoelectronic and memory devices, supercapacitors, charge-density-wave oscillators, sensors, and spintronic devices but are not limited thereto. TiS₂ particles directly grown onto a substrate, like for example an electrode surface, also find their use in sodium or lithium ion rechargeable batteries. The fine control of the morphology, size and arrangement of the TaS₂ or TiS₂ particles on the substrates' surface is beneficial for the desired application of the material. For the innumerous applications, the disulfide particles homogeneously formed via the inventive solvothermal method can be transferred to the appropriate substrate by using common techniques, such as spray or spin coating, drop casting, etc. On the other hand, the step of transferring the particles to the substrate is skipped for the heterogenous growth (step c)), which can be advantageous. To give an example, for electrochemical applications, such as the electrocatalytic evolution of hydrogen and oxygen or supercapacitors, TaS₂, as the active material, grows directly on the electrode material, which is a conductive substrate. Consequently, the step of transferring and anchoring the synthesized active material to the electrode by using a proton-conductive binder is needless. The inventive approach improves the adhesion between active material and substrate, which avoids degradation during operation and improves the stability and long-term performance of e.g. the electrode. In addition, the direct growth of TaS₂ or TiS₂ on the substrate also allows a fast and direct charge transfer between the substrate and active material that enhances the overall performance.

## Claims

1. Method for the preparation of titanium or tantalum sulfides comprising the following steps:
a) Adding a titanium or tantalum precursor to an anhydrous solvent under inert conditions,
b) Adding a sulfur source to the mixture of step a),
c) optionally providing a substrate for heterogeneous growth,
d) transferring the mixture of step b) and optionally the substrate of step c) into a suitable container, under inert conditions and sealing the container,
e) heating the sealed container of step d) to a temperature of between 170°C and 250°C, preferably between 200°C and 230°C, especially to 210°C, and
f) obtaining, optionally washing the titanium sulfide or tantalum sulfide particles with an organic solvent, and drying.

2. Method according to claim 1, wherein the titanium or tantalum precursor is selected from the group consisting of halides and metal-organic compounds, preferably from the group consisting of TaCl₅, TaF₅, Tal₅, TaBr₅, Tantalum(V) (tetra-ethoxy)(acetylacetonate), Tantalum(V) butoxide, Tantalum (V) ethoxide, Tantalum tetraethoxy dimethylaminoethoxide, Pentakis(dimethylamino)tantalum(V), Tris(diethylamido)(ethylimido)tantalum(V), t-Amylimidotris(dimethylamido)tantalum(V), tert-Butylimidotris(dimethylamido)tantalum(V), TiCl₄, TiF₄, TiBr₄, TiI₄, TiF₃, Titanyl acetylacetonate, Tris(acetylacetonato)titanium (III), Titanium (IV) ethoxide, Titanium (IV) isopropoxide, Tetrakis(dimethylamido)titanium (IV), Titanium (IV) butoxide, Tetrakis(ethylmethylamido)titanium (IV).

3. Method according to one of the claims 1 to 2, wherein the sulfur source is an organic thiol, an organic dithiol, an organic sulfide, or an organic disulfide.

4. Method according to claim 3, wherein the carbon chain of the sulfur source has between 3 and 15 carbons.

5. Method according to one of the preceding claims, wherein the sulfur source is selected from the group of 1-dodecanethiol, 1-undecanehiol, 1-decanethiol. 1-nonanethiol, 1-octanethiol, 1-heptanethiol, 1-hexanethiol, 1-pentanethiol, tert.-dodecanethiol, tert.-undecanethiol, tert.-decanethiol, tert.-nonanethiol, sec.-dodecanethiol, sec.-undecanethiol, sec.-decanethiol, sec.-nonanethiol, sec.-octanethiol, dimethyl disulfide, diethyl disulfide, di-tert-butyl disulfide, propyl disulfide, dipropyl di-sulfide, hexyl disulfide, isopentyl disulfide, diisoamyl disulfide, 1,2-ethanedithiol, 1,4-butanedithiol, 1,5-pentanedithiol, 1,6-hexanedithiol, 1,8-octanedithiol, 1,10-decanedithiol, 1,11-undecanedithiol.

6. Method according to one of the preceding claims, wherein the molar ratio of the sulfur source to the tantalum or titanium precursor is between 2:1 and 60:1, preferably between 10:1 and 30:1, more preferably around 20:1.

7. Method according to one of the preceding claims, wherein the anhydrous solvent of step a) is selected from the group consisting of hydrocarbons, and especially aromatic hydrocarbons, especially toluene, benzene, xylene, and/or mesitylene.

8. Method according to one of the preceding claims, wherein the substrate is a conductive or non-conductive material, and is preferably selected from the group consisting of borosilicate glass, quartz, Silicon wafer, Si₃N₄-coated Si wafer, sapphire wafer, mica wafer, fluorine doped tin oxide glass (FTO), gold coated FTO, glassy carbon, carbon cloth, metallic Ta plate electrode, Au foil, stainless-steel plate electrode, gold coated substrates, gallium arsenide wafer, indium tin oxide (ITO) coated glass, carbonaceous electrode, graphite coated substrate, graphene-coated substrates, hexagonal boron nitride (h-BN) films, polytetrafluoroethylene (PTFE) membranes.

9. Method according to one of the preceding claims, wherein the heating in step e) is applied for between 1 h and 84 h, preferably between 3 h and 45 h, more preferably between 4 h and 36 h, most preferably between 4.5 h and 24 h.

10. Method according to one of the preceding claims, wherein the tantalum or titanium precursor is TaCl₅ or TiCl₄, the sulfur source is 1-dodecanethiol or tert.-dodecanethiol, and the molar ratio of the sulfur source to the titanium or tantalum precursor is 20:1.

11. Method according to one of the preceding claims, wherein in step f) the organic solvent for washing is selected from the group of toluene, hexane, ethanol, methanol, isopropanol, and acetone.

12. Substrate with a layered crystalline tantalum disulfide or titanium disulfide grown on the substrate according to a method comprising the following steps:
a) Adding a titanium or tantalum precursor to an anhydrous solvent under inert conditions,
b) Adding a sulfur source to the mixture of step a),
c) providing a substrate for heterogeneous growth,
d) transferring the mixture of step b) and the substrate of step c) into a suitable container, under inert conditions and sealing the container,
e) heating the sealed container of step d) to a temperature of between 170°C and 250°C, preferably between 200°C and 230°C, especially to 210°C, and
f) obtaining, optionally washing the titanium sulfide or tantalum sulfide particles grown on the substrate with an organic solvent, and drying.

13. Substrate with a layered crystalline tantalum disulfide or titanium disulfide grown on the substrate according to claim 12, wherein in step e) the heating is applied for between 1 h and 8 h, preferably between 2 h and 5h.

14. Substrate with a layered crystalline tantalum disulfide or titanium disulfide grown on the substrate according to claim 12, wherein in step e) the heating is applied for between 12 h and 84 h, preferably between 24 h and 58 h.

15. Substrate with a layered crystalline tantalum disulfide or titanium disulfide grown on the substrate according to any of the claims 12 to 14, wherein the sulfur source of step b) is chosen from the group of unbranched organic thiols, dithiols, sulfides, or disulfides with a carbon chain of between 8 and 15 carbon atoms.

16. Substrate with a layered crystalline tantalum disulfide or titanium disulfide grown on the substrate according to any of the claims 12 to 14, wherein the sulfur source of step b) is chosen from the group of branched organic thiols, dithiols, sulfides, or disulfides with a carbon chain of between 8 and 15 carbon atoms, and unbranched organic thiols, dithiols, sulfides, or disulfides with a carbon chain of between 3 and 7 carbon atoms.

17. Substrate with a layered crystalline tantalum disulfide or titanium disulfide grown on the substrate according to any of the claims 12 to 16, wherein the substrate is Au coated FTO glass.

18. Use of a layered crystalline tantalum disulfide produced according to a method of claims 1 to 11 as quantum material, electrocatalyst for hydrogen and oxygen evolution reactions, optoelectronic and memory device, supercapacitor, charge-density-wave oscillator, transistors, in micro-electromechanical systems (MEMS), sensor material, or spintronic device, or of titanium disulfide produced according to a method of claims 1 to 11 in sodium or lithium-ion rechargeable batteries.
